# DEMANDE DE BREVET EUROPEEN

(11) **EP 1 508 469 A1**
(43) Date de publication de la demande: **23.02.2005**
(21) Numéro de dépôt: 04300541.2
(22) Date de dépôt: 16.08.2004
(51) Int. Cl.: B60N 2/34, B60N 2/30

(54) **Agencement d'habitacle de véhicule automobile**

(30) Priorité: 20.08.2003 FR 0310039
(71) Demandeur: Renault s.a.s., 92100 Boulogne Billancourt (FR)
(72) Inventeur: Nefa, Patricio, 78400 Chatou (FR)

(57) **Abrégé**

Agencement d'habitacle de véhicule automobile susceptible d'être aménagé dans au moins une de roulage et dans une configuration de couchage. Un plancher (12) porte au moins un siège couchette (18) susceptible de passer d'une position de roulage à une position de couchage. L'habitacle comporte un compartiment à bagages (80) ménage entre deux parois latérales, une paroi arrière et un podium (54) par l'intermédiaire duquel une assise (36) et un dossier (38) du siège (18) sont montés surélevés par rapport au plancher (12) du compartiment (80). Dans la position de routage, l'assise (36) est sensiblement horizontale et le dossier (38) est sensiblement vertical, une face habillée (40) de l'assise (36) et une face habillée (42) du dossier (38) étant prévues pour recevoir un usager assis. Dans la position de couchage l'assise (36) est sensiblement horizontale et le dossier (38) est sensiblement horizontal. Une face plane dorsale (50) de l'assise (36), une face plane dorsale (52) du dossier (38) et une face (96) d'une tablette (90) de couchage sont prévues pour recevoir un usager allongé. La tablette (90) étant placée dans le prolongement de l'assise (36) et du dossier (38), une surface supérieure de la face dorsale (50) de l'assise, une surface supérieure de la face dorsale (52) du dossier et une surface supérieure de la tablette (90) sont alignées. Le compartiment (80) est préservé . La face habillée (40, 42) et la face dorsale (50, 52) sont des faces opposées de l'assise (36) et du dossier (38). Des moyens de retournement de l'assise (36) et du dossier (38) assurent le passage du siège (18) de la position de roulage à la position de couchage.

## Description

La présente invention se rapporte à un agencement d'habitacle de véhicule automobile.

Elle se rapporte en particulier à un agencement d'habitacle susceptible d'être aménagé dans au moins une de roulage et dans une configuration de couchage, dans lequel un plancher porte au moins un siège susceptible de passer d'une position de roulage à une position de couchage.

Un tel agencement est décrit dans le brevet FR2604958 dans lequel une banquette d'une deuxième rangée de sièges arrière comporte une assise et un dossier articulés sur un support par un axe horizontal transversal situe au raccordement de l'assise et du dossier. L'assise et le dossier sont mutuellement inclinés à 90 degrés en position de roulage et à 180 degrés en position de couchage. La face habillée de l'assise et la face habillée du dossier sont destinées à recevoir un usager tant en position assise dans la position de roulage du siège qu'en position allongée en position de couchage du siège.

Un tel agencement présente l'inconvénient de ne pas permettre, d'avoir une surface plane de couchage quand la surface habillée du siège n'est pas plane du fait de reliefs permettant le maintien tant longitudinal que transversal de l'usager en position de roulage du véhicule. De plus un tel agencement présente l'inconvénient que les organes d'ancrage de la ceinture de sécurité, quand ils sont intégrés à la banquette au niveau de l'axe, sont saillant par rapport à l'habillage. Une telle banquette non plane et présentant des parties saillantes n'est pas idéale pour les conditions de confort du couchage.

Dans l'exemple représenté dans le brevet FR2604958, afin de disposer d'une longueur de couchage adaptée, le siège comporte des appui tête et des appui pied articulés, au détriment de la simplicité de réalisation du siège.

L'agencement décrit dans le brevet FR2604958 présente comme inconvénient qu'en position de couchage du siège, le compartiment à bagages n'est pas utilisable,

Le but de l'invention est d'optimiser un tel agencement.

Dans ce but, l'invention propose un agencement, d'habitacle de véhicule automobile susceptible d'être aménagé dans au moins une configuration de roulage et dans une configuration de couchage, dans lequel un plancher porte au moins un siège couchette susceptible de passer d'une position de roulage à une position de couchage, caractérisé en ce que l'habitacle comporte un compartiment à bagages ménage entre deux parois latérales, une paroi arrière et un podium par l'intermédiaire duquel une assise et un dossier du siège sont montes surélevés par rapport au plancher du compartiment à bagage, en ce que dans la configuration de roulage, siège est dans la position de routage dans laquelle rassise est sensiblement horizontale et le dossier est sensiblement, vertical, une face habillée de l'assise et une face habillée du dossier étant prévues pour recevoir un usager assis, en ce que dans la configuration de couchage, le siège est dans la position de couchage dans laquelle l'assise est sensiblement horizontale et le dossier est sensiblement horizontal, une face plane dorsale de l'assise, une face plane dorsale du dossier et une face d'une tablette de couchage étant prévues pour recevoir un usager allongé, la tablette étant placée entre les parois latérales dans le prolongement de l'assise et du dossier, une surface supérieure de la face dorsale de rassise, une surface supérieure de la face dorsale du dossier et une surface supérieure de la tablette étant alignées, le compartiment à bagages étant préservé entre les parois latérales, le podium et la paroi arrière, et en ce que la face habillée et la face dorsale étant des faces opposées de l'assise et du dossier, des moyens de retournement de l'assise et du dossier assurent le passage du siège de la position de roulage à la position de couchage.

La tablette peut comporter une face dorsale rembourrée, peut être mobile et comporter deux panneaux articulés l'un par rapport à l'autre.

En configuration de couchage, la tablette peut être prévue pour être placée entre une extrémité arrière du dossier et la paroi arrière.

En position de couchage du siège, au moins l'un de l'assise et du dossier peut comporter au moins une partie en porte à faux par rapport au podium respectivement vers l'avant et vers l'arrière.

Au moins l'un de l'assise ou du dossier peut être soutenu par un pied rétractable.

La face d'habillage du siège peut comporter des reliefs de maintien.

Les moyens de retournement d'au moins l'un de l'assise et du dossier peuvent comporter une biellette articulée d'une part sur le podium et d'autre part sur l'assise et/ou le dossier correspondant.

L'agencement peut comporter au moins un deuxième siège dont une surface supérieure de l'assise est adapté à être située sensiblement dans le prolongement de la surface supérieure de la face dorsale de l'assise et du dossier du siège couchette dans sa position de couchage, ledit deuxième siège comportant des moyens d'inversion du sens de son dossier d'une position arrière permettant de recevoir un usager assis face à la route à une position avant dans laquelle de l'espace est dégagé entre, l'assise du deuxième siège et le siège couchette, dans sa position de couchage.

Le deuxième siège peut être un siège pivotant selon un axe vertical.

D'autres caractéristiques et avantages de l'invention apparaîtront clairement à la lecture de la description suivante d'un mode de réalisation non limitatif de celle-ci, en liaison avec les dessins annexés sur lesquels :
- la figure 1 est une vue de côté d'un agencement d'habitacle de véhicule selon l'invention dans une configuration de roulage,
- la figure 2 est une vue de coté de l'agencement de la figure 1, représenté, dans une configuration de couchage,

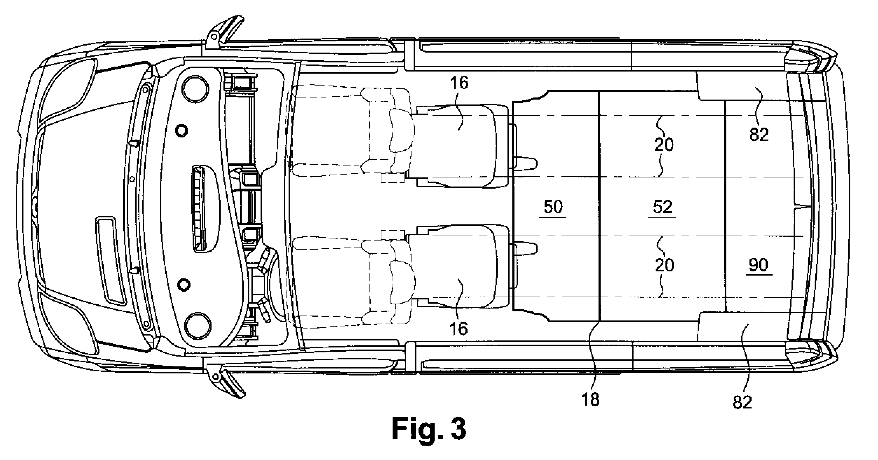

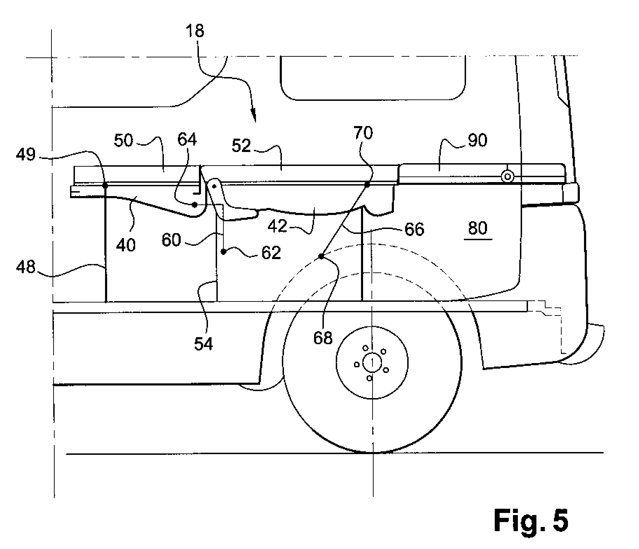

- la figure 3 est une vue de dessus de l'agencement de la figure 2,
- la figure 4 est une vue schématique de côté d'un siège de l'agencement dans une position de roulage,
- la figure 5 est une vue schématique de côté du siège de la figure 4 représenté dans une position de couchage,
- la figure 6 est une vue schématique d'une variante du siège de la figure 4,

Dans la description qui va suivre, les composants identiques ou analogues sont désignés par les mêmes références numériques sur l'ensemble des figures.

L'agencement d'habitacle selon l'invention représenté sur les figures est un agencement d'habitacle de véhicule de loisir aménagé dans un véhicule utilitaire.

Le véhicule 10 comporte un plancher 12 sur lequel sont fixés des sièges, à savoir deux sièges avant 14 d'un première rangée, deux sièges arrière intermédiaires 16 d'une deuxième rangée et une banquette arrière 18 d'une troisième rangée. La banquette arrière 18 forme un siège couchette. Dans la description qui va suivre, la banquette arrière 18 sera appelée siège arrière.

Les sièges sont montés coulissants sur des radis 20, par l'intermédiaire de moyens connus.

Chaque siège 16 comporte une assise 32 et un dossier 34 avec un habillage rembourré. Sur les figures, le siège 16 est représenté avancé à fond vers l'avant, dos à la route, c'est à dire qu'il est dans une position dans laquelle un usager peut s'asseoir en faisant face à l'arrière du véhicule. Le siège 16 est monté à rotation par rapport au plancher 12 de telle manière qu'il peut pivoter selon un axe vertical pour être placé dans une position face à la route dans laquelle un usager peut s'asseoir en faisant face à la planche de bord du véhicule.

Les moyens permettant le pivotement du siège sont bien connus, et selon l'invention, ils constituent des moyens d'inversion du sens du dossier 34 du siège 16 d'une position arrière permettant de recevoir un usager assis face à la route à une position avant permettant de recevoir un usager dos à la route. Dans l'exemple représenté, les moyens permettant le pivotement du siège 16 sont aussi des moyens d'inversion du sens de l'assise 32.

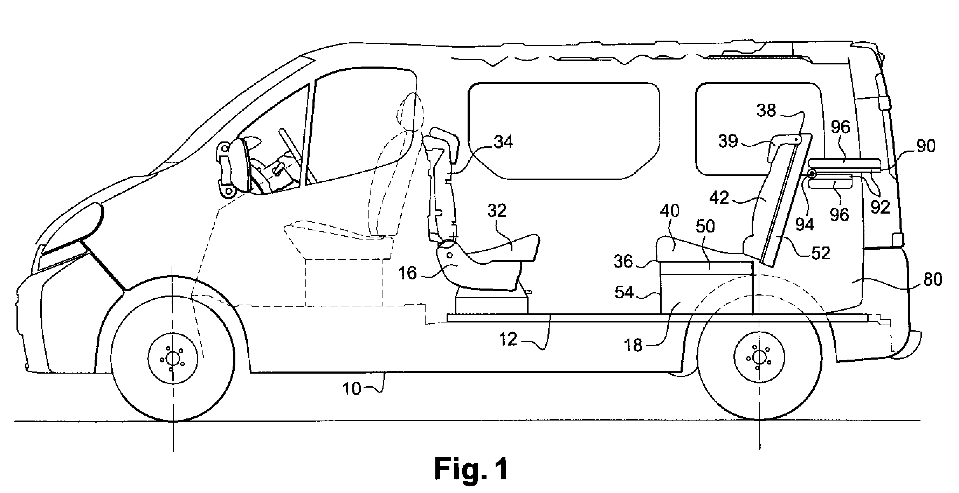

Dans la configuration de roulage représentée à la figure 1, la banquette arrière 18 ou siège arrière 18 est dans une position de roulage dans laquelle son assise 36 est sensiblement horizontale et son dossier 38 est sensiblement vertical. Une face habillée 40 de l'assise 36 et une face habillée 42 du dossier 38 sont prévues pour recevoir un usager assis face à la route.

Afin le confort de roulage de l'usager, en position de roulage, la surface supérieure de l'habillage 40 de l'assise 36 est inclinée vers le bas et vers l'arrière. L'inclinaison de l'assise 36 permet d'assurer le confort de l'usager, mais aussi sa sécurité, du fait de la possibilité d'intégrer des moyens d'anti sous marinage dans l'assise 36, sous le rembourrage de la face habillée 40. De plus, la surface avant de l'habillage 42 du dossier 38 est inclinée vers l'arrière et vers le haut. La face d'habillage 40, 42 du siège 18 comporte des reliefs de maintien. Typiquement, les reliefs de maintien sont tels que la face supérieure de l'assise 36 comme la surface avant du dossier 38 est plane aux emplacements où des usagers sont prévus pour être assis et tels que la face supérieure comporte des bourrelets de maintien latéral de l'usager, De plus, des accoudoirs sont montés escamotables dans les bourrelets du dossier 38.

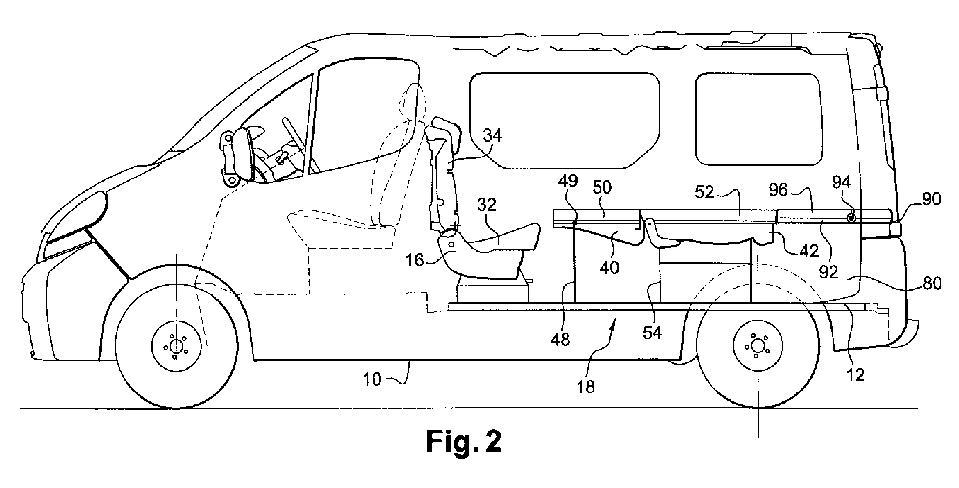

Dans la configuration de couchage représentée à la figure 2, le siège arrière 18 est dans une position de couchage dans laquelle l'assise 36 est sensiblement horizontale et le dossier 38 est sensiblement horizontal. Une face plane dorsale 50 de l'assise et une face plane dorsale 52 du dossier sont prévues pour recevoir un usager allongé sur le siège 18. La face dorsale 50, 52 est une face dont le garnissage est rembourré ou non, mais qui est plan de façon à permettre un couchage confortable de l'usager. Dans l'exemple représenté, la face dorsale 50, 52 est rembourrée afin de former un véritable matelas de couchage.

Dans la configuration de couchage, l'avant de l'assise 36 est soutenue par un pied 48 monté à rotation par exemple par rapport à l'assise 36, par exemple l'intermédiaire d'un axe motorisé 49.

La face habillée 40, 42 et la face dorsale 50, 52 du siège 18 sont des faces opposées de l'assise 36 et du dossier 38. Avantageusement, en position de couchage du siège, ce n'est pas la face habillée 40, 42 qui est utilisée pour recevoir l'usager allongé, au bénéfice du confort de ce dernier, qui bénéficie des reliefs de l'habillage 40, 42 en roulage, et de la planéité du garnissage de le face dorsale 50, 52 servant pour le couchage.

Le siège arrière, 18 comporte un podium 54 monté à coulissement par rapport au plancher 12. Le terme podium désigne tout support de l'assise et du dossier, ce support permettant de surélever l'assise et la dossier par rapport au plancher 12, au bénéfice du confort de l'usager assis sur le siège.

L'assise 36 et le dossier 38 sont montés mobiles sur le podium 54 afin que des moyens de retournement de l'assise 36 et du dossier 38 assurent le passage du siège 18 de la position de roulage à la position de couchage. Les moyens de retournement de l'assise comportent au moins une biellette articulée d'une part sur l'assise 36 et d'autre part sur le podium 54.

En position de couchage du siège 18, l'assise 36 et le dossier 38 comportent au moins une partie en porte à faux par rapport au podium 54 respectivement vers l'avant et vers l'arrière. Le pied 48 est favorable au soutien de l'assise 36 horizontale en porte à faux. Dans l'exemple décrit, le dossier 38 n'est pas soutenu par un pied. Dans un autre mode de réalisation, un pied de soutien pourrait s'avérer nécessaire.

Dans t'exempte représenté, l'assise 36 est montée à rotation sur le podium 54 par l'intermédiaire d'une biellette 60 en forme de L. La biellette 60 est montée mobile à rotation à chacune de ses extrémités afin de constituer un moyen de retournement de l'assise. Une extrémité basse de la biellette 60 est reliée par un axe 62 au podium et une extrémité haute est reliée par un axe 64 à l'assise 36. Dans l'exemple de réalisation décrit, chaque axe est actionné par un moto réducteur permettant la rotation de la biellette 60. Des moyens de verrouillage non représentés permettent de verrouiller la biellette 60 par rapport au podium 54. Il s'agit par exemple d'un pion motorisé solidaire du podium 54 et apte à coopérer avec un alésage prévu dans la biellette 60 pour chacune des positions de roulage et de couchage du siège 18. De tels moyens de verrouillage peuvent être prévus entre la biellette 60 et l'assise 36,

Dans l'exemple représenté, le dossier 38 est monté à rotation sur le podium 54 par l'intermédiaire d'une biellette 66 mobile à rotation à chacune de ses extrémités afin de constituer un moyen de retournement du dossier. Une extrémité basse de la biellette 66 est reliée par un axe 68 au podium et une extrémité haute est reliée par un axe 70 au dossier 38. Dans l'exemple de réalisation décrit, chaque axe est actionné par un moto réducteur permettant la rotation de la biellette 66, Des moyens de verrouillage non représentes permettent de verrouiller la biellette 66 par rapport au podium 54 et au dossier 38. Il s'agit par exemple d'un pion motorisé solidaire du podium 54 et apte à coopérer avec un alésage prévu dans la biellette 66 pour chacune des positions de routage et de couchage du siège 18. Dans un mode de le dossier 38 présente aussi des moyens de verrouillages latéraux aptes à coopérer avec des parois latérales de l'habitacle.

Pour faire passer le siège 18 de la position de roulage à la position de couchage, l'usager actionne par exemple un interrupteur pour les différents moteur par l'intermédiaire d'une unité de commande. L'unité de commande pilote d'abord le déverrouillage des biellettes, puis la rotation de l'axe 70 afin de dégager l'extrémité arrière de l'assise 36 par rapport à l'extrémité basse du dossier 38, puis la rotation des axes 62 et 64 ainsi que le déploiement du pied 48, puis la rotation des axes 68 et 70 afin de terminer le repli du dossier 38 contre le podium 54.

Il est a remarquer qu'en position de roulage du siège 18, la branche de la biellette 60 proche de l'axe 62 est inclinée vers l'arrière, tandis qu'en position de couchage du siège, ladite branche est verticale. De cette manière, dans la position de couchage du siège, l'axe 64 est situé plus en avant par rapport au podium 54, afin de dégager de l'espace à l'arrière de l'assise, espace dans lequel vient se loger le dossier, au dessus du podium 54. De plus, en position de couchage, l'axe 64 est situé plus haut par rapport au plancher 12 afin de surélever l'assise par rapport au plancher 12.

De même, il est a remarquer qu'en position de roulage du siège 18, la biellette 66 est inclinée vers l'arrière d'environ 20 degrés, tandis qu'en position de couchage du siège, la biellette 66 est inclinée d'environ 10 degrés. De cette manière, dans la position de couchage du siège, l'axe 70 est situé plus haut par rapport au plancher 12 afin de surélever le dossier 38 par rapport au plancher 12, au bénéfice de la hauteur disponible sous la partie en porte à faux du dossier 38.

Il est a remarquer que le podium 54 permet que l'assise 36 et le dossier 38 du siège 18 soient montés surélevés par rapport au plancher 12 du compartiment à bagages, au bénéfice de l'utilisation de l'espace de l'habitacle situé derrière le podium au dessus du plancher 12.

Dans cet espace, l'habitacle comporte un compartiment à bagages 80 ménagé entre le podium 54, deux parois latérales 82 et une paroi arrière 84 aménagée sur le hayon du véhicule.

L'habitacle comporte une tablette horizontale 90 prévue dans l'exemple représenté pour être montée les parois latérales 82 et la paroi arrière 84, au dessus du compartiment à bagages 80. La tablette 90 est maintenue de manière classique sur les parois latérales 82 en étant posée sur des nervures. Dans l'exemple représenté, la tablette 90 comporte deux panneaux articulés l'un par rapport à l'autre. Chaque panneau comporte une planche rigide 92 raccordée à une extrémité à une charnière 94 pour l'articulation avec l'autre panneau. Chaque panneau comporte une face dorsale 96 prévue pour être utilisée pour prolonger le couchage formé par l'assise 36 et le dossier 38 du siège arrière. 18. La face dorsale 96 de la tablette 90 est rembourrée, le rembourrage étant prévu pour constituer un matelas.

Dans la position de roulage du siège 18 la tablette 90 est prévue pour être placée en position haute, entre l'extrémité haute du dossier 38 et la paroi arrière 84.

Dans la configuration de couchage de l'aménagement selon l'invention, la tablette 90 est déployée, en position basse, la face dorsale 96 vers le haut. Ainsi, le siège 18 étant dans la position de couchage, la surface supérieure de la face dorsale 50 de l'assise 36, la surface supérieure de la face dorsale 52 du dossier 38 et la surface supérieure de la tablette 90 sont alignées. La tablette 90 forme alors une tablette de couchage.

Il est à remarquer que dans la configuration de couchage de l'aménagement selon l'invention, le compartiment à bagages 80 est préservé entre les parois latérales 82, le podium 54 et la paroi arrière 84. La position surélevée de l'assise 36 et du dossier 38 sont favorable à la capacité de chargement préservée dans le compartiment à bagages 80.

Il est à remarquer qu'avantageusement, chaque appuie tête 39 du siège 18 est rétractable dans l'habillage 42 du dossier 38, ce qui permet d'éviter de les démonter pour installer le siège en position de couchage.

Avantageusement, la surface, supérieure de l'assise 32 du siège intermédiaire 16 est adaptée à être située sensiblement dans le prolongement de la surface supérieure, de la face dorsale 50 de l'assise 36 et du dossier 38 du siège 18 dans sa position de couchage, au bénéfice de la longueur de couchage disponible. Le pivotement du siège 16 permet de disposer de moyens d'inversion du sens de son dossier 34 afin de dégager de l'espace entre l'assise 32 du siège 16 et le siège couchette 18 dans sa position de couchage. Dans l'exemple représenté, la longueur de couchage supplémentaire constituée par l'assise 32 du siège 16, n'est pas horizontale et plane, et ne doit être utilisée que lorsque l'usager est plus grand que la longueur de couchage disponible sur le siège 18 et la tablette 90. L'assise 32 est ici surtout, utilisable comme une table de chevet.

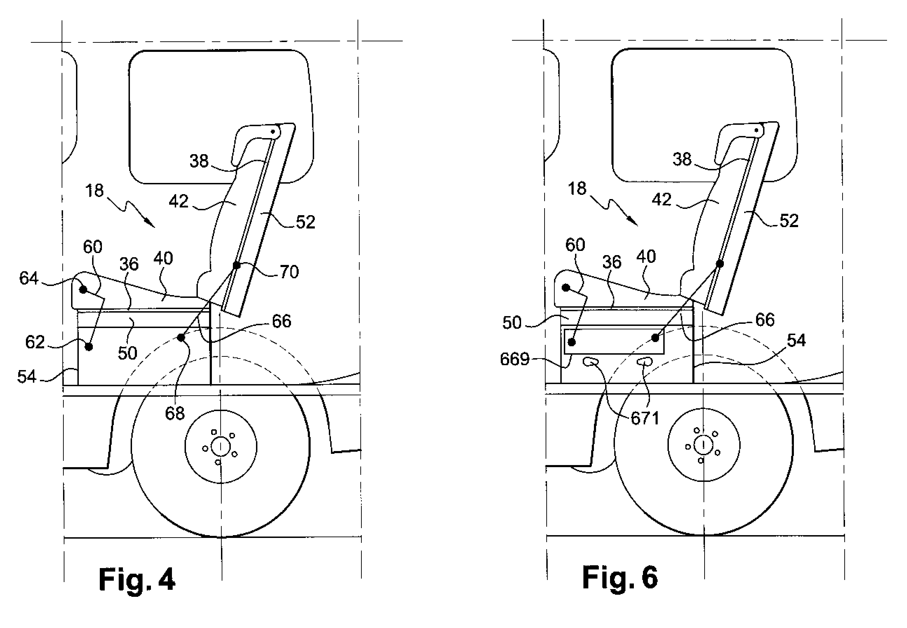

Dans une variante de réalisation représentée à la figure 6, l'assise 36 et le dossier 38 sont fixés au podium 54 par l'intermédiaire de biellettes 60 et 66 montées sur un coulisseau 669 formant un support monté à coulissement par rapport au podium 54. Le coulissement du coulisseau 669 est actionné par des cames 671 motorisée pour faire monter l'assise et le dossier lorsque le siège 18 est en position de couchage afin de les surélever par rapport au plancher 12. Des moyens de verrouillage motorisés, non représentés, tels qu'un pion motorisé solidaire du podium apte à coopérer avec un alésage et du coulisseau 669 respectivement dans chacune d'une position haute et d'une position haute du coulisseau 669.

Dans une variante de réalisation non représentée, afin de prolonger la longueur de couchage du siège couchette, le siège intermédiaire comporte une assise réversible par l'intermédiaire de moyens de retournement tels que deux biellettes latérales situées à mi longueur du podium du siège intermédiaire, permettant par exemple un coulissement de l'assise vertical vers le haut puis une rotation à 180 degrés, puis un coulissement vertical vers le bas.

Dans une variante de réalisation non représentée, le siège intermédiaire comporte un dossier repliable contre l'assise, afin de prolonger la longueur de couchage par l'intermédiaire du dos du dossier, l'assise du siège intermédiaire étant en position face à la route.

Dans une variante d'aménagement d'habitacle non représentée, le siège couchette est un siège pincé en deuxième rangée.

## Revendications

1. Agencement d'habitacle de véhicule automobile susceptible d'être aménagé dans au moins une configuration de routage et dans une configuration de couchage, dans lequel un plancher (12) porte au moins un siège couchette (18) susceptible de passer d'une position de routage à une position de couchage, **caractérise en ce que** l'habitacle comporte un compartiment, à bagages (80) ménagé entre deux parois latérales (82), une paroi arrière et un podium (54) par l'intermédiaire duquel une assise (36) et un dossier (38) du siège (18) sont montés surélevés par rapport au plancher (12) du compartiment à bagage (80), **en ce que** dans la configuration de roulage, le siège (18) est dans la position de routage dans laquelle l'assise (36) est sensiblement horizontale et le dossier (38) est sensiblement vertical, une face habillée (40) de rassise (36) et une face habillée (42) du dossier (38) étant prévues pour recevoir un usager assis, **en ce que** dans la configuration de couchage, le siège (18) est dans la position de couchage dans laquelle l'assise (36) est sensiblement horizontale et le dossier (38) est sensiblement horizontal, une face plane dorsale (50) de l'assise (36), une face plane dorsale (52) du dossier (38) et une face (96) d'une tablette (90) de couchage étant prévues pour recevoir un usager allongé, la tablette (90) étant placée entre les parois latérales (82) dans le prolongement de l'assise (36) et du dossier (38), une surface supérieure de la face dorsale (50) de l'assise, une surface supérieure de la face dorsale (52) du dossier et une surface supérieure de la tablette (90) étant le compartiment à bagages (80) étant préservé entre les parois latérales (82), le podium (54) et la paroi arrière, et **en ce que** la face habillée (40, 42) et la face dorsale (50, 52) étant des faces opposées de l'assise (36) et du dossier (38), des moyens de retournement (60, 66) de l'assise (36) et du dossier (38) assurent le passage du siège (18) de la position de routage à la position de couchage.

2. Agencement selon la revendication 1, **caractérise en ce que** la tablette (90) comporte une face dorsale (96) rembourrée.

3. Agencement selon l'une quelconque des revendications précédentes, **caractérisé en ce que** la tablette (90) est mobile et comporte deux panneaux articulés l'un par rapport à l'autre.

4. Agencement selon l'une quelconque des revendications précédentes, **caractérisé en ce qu'**en configuration de couchage, la tablette (90) est prévue pour être placée entre une extrémité arrière du dossier (38) et la paroi arrière.

5. Agencement selon l'une quelconque des revendications précédentes, **caractérisé en ce que** en position de couchage du siège (18), au moins l'un de l'assise (36) et du dossier (38) comporte au moins une partie en porte à faux par rapport au podium (54) respectivement vers l'avant et vers l'arrière

6. Agencement selon la revendication précédente, **caractérisé en ce que** au moins l'un de l'assise (36) ou du dossier (38) est soutenu par un pied rétractable (48).

7. Agencement selon l'une quelconque des revendications précédentes, **caractérisé en ce que** la face d'habillage (40, 42) du siège (18) comporte des reliefs de maintien.

8. Agencement selon l'une quelconque des revendications précédentes, **caractérisé en ce que** les moyens de retournement (60, 66) d'au moins l'un de l'assise (36) et du dossier (38) comporte une biellette (60) articulée d'une part sur le podium (54) et d'autre part sur l'assise et/ou le dossier correspondant.

9. Agencement selon l'une quelconque des revendications précédentes, **caractérisé en ce qu'**il comporte au moins un deuxième siège (16) dont une surface supérieure de l'assise (32) est adapté à être située sensiblement dans le prolongement de la surface supérieure de la face dorsale (50, 52) de l'assise (36) et du dossier (38) du siège couchette (18) dans sa position de couchage, ledit deuxième siège comportant des moyens d'inversion du sens de son dossier d'une position arrière permettant de recevoir un usager assis face a la route à une position avant dans laquelle de l'espace est dégagé entre l'assise du deuxième siège et le siège couchette dans sa position de couchage.

10. Agencement selon la revendication précédente, **caractérisé en ce que** le deuxième siège (16) est un siège pivotant selon un axe vertical.
